# EUROPÄISCHE PATENTSCHRIFT

(11) **EP 3 569 917 B1**
(45) Veröffentlichungstag und Bekanntmachung des Hinweises auf die Patenterteilung: **16.12.2020**
(21) Anmeldenummer: 19169310.0
(22) Anmeldetag: 15.04.2019
(51) Int. Cl.: F16M 11/04, F16M 13/02

(54) **HALTEVORRICHTUNG**
CLAMPING DEVICE
DISPOSITIF DE RETENUE

(30) Priorität: 18.05.2018 DE 102018207930
(43) Veröffentlichungstag der Anmeldung: 20.11.2019
(73) Patentinhaber: SACS Aerospace GmbH, 72186 Empfingen (DE)
(72) Erfinder: Birk, Martin, 78628 Rottweil (DE); Dratius, Oliver, 72461 Albstadt (DE); Kuhm, Rolf, 71063 Sindelfingen (DE)
(74) Vertreter: Patentanwälte Magenbauer & Kollegen Partnerschaft mbB

(56) Entgegenhaltungen:
- WO-A1-2017/192876
- WO-A2-2012/018405
- US-A1- 2004 089 781
- US-A1- 2011 049 321

## Beschreibung

Die Erfindung betrifft eine Haltevorrichtung zur zeitweiligen Festlegung eines plattenförmigen Gegenstands, insbesondere eines Tabletcomputers oder eines Smartphones. Insbesondere betrifft die Erfindung eine derartige Haltevorrichtung, die zur Verwendung in einem Luftfahrzeug, beispielsweise einem Helikopter, einem Verkehrsflugzeug oder einem Privatflugzeug, ausgebildet ist.

Aus der US 2004/089781 A1 ist ein Halter für eine Computereinheit zur Anbringung der Computereinheit unter einem Schreibtisch oder einer anderen Arbeitsfläche bekannt, wobei der Halter ein flexibles Seil umfasst, das ausgehend von einer Unterseite des Schreibtischs nach unten verläuft und unter die Computereinheit geführt ist, um diese zu stützen. Das flexible Seil ist an zwei Seitenplatten des Halters aufgenommen, wobei einer der Halter einen Verstellmechanismus zur Änderung der Länge des Seils enthält.

Die WO 2012/018405 A2 offenbart eine Vorrichtung zum Befestigen eines Geräts an einem Gegenstand, wobei die Vorrichtung mehrere Finger zum Ergreifen des Geräts und eine Zugvorrichtung zur Ausübung von Zugkräften auf die Finger umfasst. Die Zugvorrichtung umfasst eine Spule mit einer darauf aufgenommenen, aus- und einziehbaren Schnur, die mit den Fingern gekoppelt ist. Ferner umfasst die Vorrichtung einen Ständer, der auf im Allgemeinen horizontalen Flächen ruht.

Aufgrund des zunehmenden Funktionsumfangs von Tabletcomputern finden diese vermehrt Anwendung im Bereich der zivilen Luftfahrt. Beispielsweise kann ein Tabletcomputer dazu genutzt werden, Kartenmaterial, Wetterdaten oder sonstige für die Flugdurchführung erforderlichen Informationen darzustellen, die als Ergänzung zu den Informationen genutzt werden können, die durch die fest im Luftfahrzeug eingebauten Bordinstrumente bereitgestellt werden. Exemplarisch weist ein Tabletcomputer eine zumindest im Wesentlichen plattenförmige Gestalt auf und wird üblicherweise mittels eines berührungsempfindlichen Bildschirms, der eine größte Oberfläche des Tabletcomputers bestimmt, bedient. Üblicherweise ist vorgesehen, dass eine Breite und eine Höhe des Tabletcomputers erheblich größer als eine Dicke des Tabletcomputers sind. Für eine Verwendung in einem Luftfahrzeug muss eine Haltevorrichtung für einen solchen Tabletcomputer im Rahmen eines bestimmungsgemäßen Gebrauchs darauf ausgelegt sein, den Tabletcomputer auch bei einem Auftreten großer Beschleunigungen, wie sie beispielsweise während des Landevorgangs für das Luftfahrzeug oder beim Durchfliegen von turbulenten Luftschichten auftreten, sicher in einer vorgegebenen Stellung zu halten.

Dementsprechend besteht die Aufgabe der Erfindung darin, eine Haltevorrichtung bereitzustellen, die eine zuverlässige Festlegung des plattenförmigen Gegenstands, insbesondere eines Tabletcomputers, ermöglicht.

Diese Aufgabe wird mit den Merkmalen des Anspruchs 1 gelöst. Die Halteeinrichtung umfasst einen ersten Halter, der eine Kupplungsanordnung zur Verbindung mit einer Trageinrichtung und einen ersten Aufnahmeabschnitt für eine zumindest in zwei Raumrichtungen formschlüssige Aufnahme einer ersten Schmalseite eines plattenförmigen Gegenstands aufweist, einen zweiten Halter, der einen zweiten Aufnahmeabschnitt für eine zumindest in zwei Raumrichtungen formschlüssige Aufnahme einer zweiten Schmalseite eines plattenförmigen Gegenstands aufweist, sowie ein flexibel ausgebildetes Zugmittel, das mit dem ersten Halter und dem zweiten Halter verbunden ist und das für eine Zugkraftübertragung zwischen dem ersten Halter und dem zweiten Halter zur Festlegung des plattenförmigen Gegenstands ausgebildet ist, wobei dem ersten Halter eine Wickeleinrichtung mit einer drehbar am ersten Halter gelagerten und von einem Endbereich des Zugmittels umschlungenen Wickelwelle zugeordnet ist, die für ein Aufwickeln und ein Abwickeln des Zugmittels ausgebildet ist, wobei der Wickelwelle eine am ersten Halter abgestützte, vorgespannte Federanordnung für eine Bereitstellung einer Zugkraft auf das Zugmittel zugeordnet ist.

Der erste Halter umfasst eine Kupplungsanordnung, die wahlweise für eine unmittelbare Befestigung an einem als Trageinrichtung dienenden Verkleidungsteil oder einer als Trageinrichtung dienenden Rumpfstruktur eines Luftfahrzeugs oder für eine Kopplung mit einem als Trageinrichtung dienenden Schwenkarm bzw. Teleskoparm, der seinerseits mit einem Verkleidungsteil oder einer Rumpfstruktur verbunden sein kann, ausgebildet ist. Beispielhaft kann die Kupplungsanordnung als Bestandteil eines, insbesondere feststellbaren, Kugelgelenks oder eines, insbesondere feststellbaren, Schwenkgelenks, ausgebildet sein.

Um eine sinnvolle Bedienung eines in der Halteeinrichtung aufgenommenen und in der Art eines Tabletcomputers ausgebildeten plattenförmigen Gegenstands zu ermöglichen ist es erforderlich, dass eine, insbesondere als berührungsempfindlicher Bildschirm ausgebildete, größte Oberfläche des plattenförmigen Gegenstands derart in der Halteeinrichtung aufgenommen werden kann, dass diese größte Oberfläche allenfalls randseitig von der Halteeinrichtung bedeckt ist. Dies wird dadurch erreicht, dass sowohl am ersten Halter als auch am zweiten Halter jeweils Aufnahmeabschnitte ausgebildet sind, die an einander entgegengesetzt ausgerichteten und jeweils an die größte Oberfläche angrenzenden Schmalseiten des plattenförmigen Gegenstands angreifen und vorzugsweise die Schmalseite des plattenförmigen Gegenstands derart umgreifen, dass dieser zumindest in zwei zueinander senkrechten Raumrichtungen in formschlüssiger Weise festgelegt ist. Eine Festlegung des plattenförmigen Gegenstands in einer dritten, senkrecht zu den vorgenannten zwei Raumrichtungen ausgerichteten Raumrichtung kann insbesondere durch eine kraftschlüssige (reibschlüssige) Verbindung zwischen dem Gegenstand und der Halteeinrichtung gewährleistet werden, wodurch auch geometrisch unterschiedlich gestaltete plattenförmige Gegenstände, die sich insbesondere im Hinblick auf eine Kantenlänge ihrer in der Regel rechteckig ausgebildeten größten Oberfläche unterscheiden, in der Halteeinrichtung aufgenommen werden können.

Ferner wird die Aufnahme von geometrisch unterschiedlich gestalteten plattenförmigen Gegenständen in der Halteeinrichtung dadurch erleichtert, dass der zweite Halter nicht starr mit dem ersten Halter verbunden ist, sondern vielmehr zwischen dem zweiten Halter und dem ersten Halter ein flexibles Zugmittel angeordnet ist, das für eine Zugkraftübertragung zwischen dem zweiten Halter und dem ersten Halter ausgebildet ist. Mit dieser Zugkraftübertragung wird einerseits erreicht, dass sowohl der zweite Halter als auch der erste Halter jeweils zuverlässig an den einander entgegengesetzten Schmalseiten des plattenförmigen Gegenstands anliegen, andererseits gewährleistet die Zugkraftübertragung auch die gewünschte kraftschlüssige Kopplung zwischen den Haltern und dem Gegenstand. Vorzugsweise ist das Zugmittel derart ausgebildet, dass es bei einem bestimmungsgemäßen Gebrauch der Halteeinrichtung keine nennenswerte elastische Dehnung erfährt und zumindest bezüglich einer Raumrichtung ein geringes Widerstandsmoment gegen Biegung aufweist, so dass ein Abschnitt des Zugmittels, der nicht für eine Festlegung des Gegenstands benötigt wird, beispielsweise durch Aufwickeln platzsparend verstaut werden kann.

Zweckmäßig ist es, wenn der erste Aufnahmeabschnitt rinnenförmig ausgebildet ist und/oder längs einer ersten Erstreckungsachse eine erste U-förmige Profilierung aufweist und/oder wenn der zweite Aufnahmeabschnitt rinnenförmig ausgebildet ist und/oder längs einer zweiten Erstreckungsachse eine zweite U-förmige Profilierung aufweist. Hierdurch wird die gewünschte formschlüssige Festlegung des plattenförmigen Gegenstands in zumindest zueinander senkrechten zwei Raumrichtungen gewährleistet. Vorzugsweise ist die U-förmige Profilierung des ersten Aufnahmeabschnitts und/oder des zweiten Aufnahmeabschnitts derart ausgebildet, dass die U-Schenkel des jeweiligen Aufnahmeabschnitts nicht vollständig parallel zueinander ausgerichtet sind, sondern vielmehr ausgehend von einem Verbindungsabschnitt zwischen den beiden U-Schenkeln einen zunehmenden Abstand zueinander aufweisen. Hierdurch können plattenförmige Gegenstände mit unterschiedlicher Dicke im jeweiligen Aufnahmeabschnitt aufgenommen werden, ohne dass die formschlüssige Festlegung in zwei zueinander senkrechten Raumrichtungen in Frage gestellt wird. Ferner sind die beiden Aufnahmeabschnitte derart zueinander ausgerichtet, dass freie Endbereiche der U-Schenkel des einen Aufnahmeabschnitts jeweils in Richtung des gegenüberliegenden Aufnahmeabschnitts weisen. Vorzugsweise ist vorgesehen, dass der jeweilige Aufnahmeabschnitt längs einer geradlinigen Erstreckungsachse eine konstante, U-förmige Profilierung aufweist. Alternativ kann vorgesehen sein, dass wenigstens einer der Aufnahmeabschnitte rinnenförmig ausgebildet ist, wobei hier nicht zwingend eine konstante Profilierung längs einer Erstreckungsachse eingehalten werden muss.

Bevorzugt ist vorgesehen, dass der erste Aufnahmeabschnitt und/oder der zweite Aufnahmeabschnitt eine U-förmige Profilierung mit einem kürzeren U-Schenkel und einem längeren U-Schenkel aufweist und dass das Zugmittel am längeren U-Schenkel verläuft, insbesondere am längeren U-Schenkel angebracht ist. Der gegebenenfalls am ersten Aufnahmeabschnitt vorgesehene längere U-Schenkel dient insbesondere zu einer rückseitigen Abstützung des plattenförmigen Gegenstands, damit dieser beispielswese bei einem bestimmungsgemäßen Gebrauch eines Tabletcomputers, bei dem ein Benutzer beispielsweise Bedienberührungen wie Tippen oder Wischen auf einen berührungsempfindlichen Bildschirm des Tabletcomputers vornimmt, nicht in der Halteeinrichtung verkippen kann. Der gegebenenfalls am zweiten Aufnahmeabschnitt vorgesehene längere U-Schenkel gewährleistet eine zusätzliche Auflage des zweiten Halters an einer Rückseite des plattenförmigen Gegenstands, wodurch ein Verkippen des zweiten Halters gegenüber dem plattenförmigen Gegenstand verhindert wird. Bevorzugt ist vorgesehen, dass das Zugmittel an einer Rückseite des jeweiligen Aufnahmeabschnitts verläuft bzw. befestigt ist, wobei diese Rückseite demjenigen Bereich der Halteeinrichtung abgewandt ist, der zur Aufnahme des plattenförmigen Gegenstands ausgebildet ist.

Erfindungsgemäß ist vorgesehen, dass dem ersten Halter eine Wickeleinrichtung mit einer drehbar am ersten Halter gelagerten und von einem Endbereich des Zugmittels umschlungenen Wickelwelle zugeordnet ist, die für ein Aufwickeln und ein Abwickeln des, insbesondere als flexibles Gurtband ausgebildeten, Zugmittels ausgebildet ist. Die Wickeleinrichtung ermöglicht einerseits durch Abwickeln des Zugmittels von der Wickelwelle eine Größenanpassung der Halteeinrichtung an die Größe des jeweils in der Halteeinrichtung aufzunehmenden plattenförmigen Gegenstands, da der zweite Halter innerhalb eines vorgebbaren Bereichs einen vorzugsweise frei einstellbaren Abstand gegenüber dem ersten Halter einnehmen kann. Andererseits ermöglicht die Wickeleinrichtung eine zuverlässige Festlegung des plattenförmigen Gegenstands in der Halteeinrichtung, indem nach Einsetzen des plattenförmigen Gegenstands in die Halteeinrichtung zumindest ein Abschnitt des Zugmittels durch eine Rotation der Wickelwelle aufgewickelt werden kann, um hierdurch eine Zugkraft zwischen der am ersten Halter ausgebildeten Wickeleinrichtung und dem zweiten Halter bereitzustellen. Bei dem Zugmittel kann es sich beispielsweise um eine Gliederkette aus Metallgliedern oder Kunststoffgliedern, um ein Seil aus Naturfasern und/oder Kunststoffasern, um ein Band, insbesondere ein Gewebeband aus Naturfasern und/oder Kunststoffasern oder eine Folie, insbesondere um eine Kunststofffolie, handeln. Bevorzugt ist das Zugmittel als flexibles Gurtband ausgebildet, wie es aus dem Bereich der Sicherheitsgurte für Luftfahrzeuge und Kraftfahrzeuge bekannt ist. Bei dem Gurtband handelt es sich insbesondere um ein Gewebe aus einer Vielzahl von Fäden, insbesondere Kunststofffäden, die vorzugsweise in Richtung ihrer Längserstreckung eine geringe elastische Dehnungsfähigkeit und quer zu ihrer Längserstreckung ein geringes Widerstandsmoment gegen Biegung aufweisen, so dass auch das aus den Fäden hergestellte Gurtband in Richtung seiner längsten Kanten eine geringe elastische Dehnungsfähigkeit aufweist und in einer Raumrichtung quer zu den längsten Kanten bereits bei Einleitung einer geringen Kraft gekrümmt werden kann.

Ferner ist erfindungsgemäß vorgesehen, dass der Wickelwelle eine am ersten Halter abgestützte, vorgespannte Federanordnung für eine Bereitstellung einer, insbesondere von einem Abstand des zweiten Halters vom ersten Halter abhängigen, Zugkraft auf das Zugmittel zugeordnet ist.

Ergänzend kann vorgesehen sein, dass eine Wickelachse der Wickelwelle parallel zur Erstreckungsachse des ersten Aufnahmeabschnitts ausgerichtet ist.

Die Federanordnung kann beispielsweise als Wendelfeder ausgebildet sein, die zumindest weitgehend in einer Bohrung der Wickelwelle aufgenommen ist und mit einem ersten Windungsende an der Wickelwelle festgelegt ist. Ferner ist ein zweites Windungsende der Federanordnung am Halter festgelegt, so dass bei einer Rotation der Wickelwelle um eine Wickelachse, die durch eine Abwicklung des Zugmittels von der Wickelwelle hervorgerufen wird, eine Speicherung von Energie in der Federanordnung stattfindet. Mit Hilfe der gespeicherten Energie kann gewährleistet werden, dass das Zugmittel mit einer Vergrößerung eines Abstands zwischen dem zweiten Halter und dem ersten Halter mit einer sich vergrößernden Zugkraft beaufschlagt wird. Hierdurch wird stets eine zumindest vorläufige Anlage des zweiten Halters an einer Schmalseite des plattenförmigen Gegenstands gewährleistet, der in die Halteeinrichtung eingesetzt wird, wobei durch die zunehmende Zugkraft von der Wickelwelle auf das Zugmittel das typischerweise mit zunehmender Größe ansteigende Gewicht des plattenförmigen Gegenstands Berücksichtigung findet. Um eine möglichst symmetrische Belastung des Zugmittels und der zugeordneten Federanordnung zu gewährleisten ist es vorteilhaft, wenn die Wickelachse der Wickelwelle parallel zur Erstreckungsachse des ersten Aufnahmeabschnitts ausgerichtet ist, da für diesen Fall davon ausgegangen werden kann, dass das Zugmittel bei einer Anlage des zweiten Halters an der Schmalseite des plattenförmigen Gegenstands nicht in sich verdreht (tordiert) ist, so dass unerwünschte Krafteinflüsse auf das Zugmittel und die Federanordnung vermieden werden können.

Vorteilhaft ist es, wenn der Wickelwelle eine Blockiereinrichtung für eine drehfeste Festlegung der Wickelwelle am ersten Halter zugeordnet ist, die ein Betätigungselement umfasst, das für eine manuelle Drehmomenteinleitung auf die Wickelwelle ausgebildet ist. Die Blockiereinrichtung ermöglicht die Sicherung des plattenförmigen Gegenstands an der Halteeinrichtung, nachdem ein vorteilhafter Abstand zwischen dem ersten Halter und dem zweiten Halter eingestellt wurde. Vorzugsweise ist es vorgesehen, die Blockiereinrichtung zu einem Zeitpunkt zu aktivieren, zu dem der plattenförmige Gegenstand zwischen dem zweiten Halter und dem ersten Halter aufgenommen wurde und die in der Federanordnung gespeicherte Energie zumindest soweit abgerufen wurde, dass der zweite Halter formschlüssig an der zugeordneten Schmalseite des plattenförmigen Gegenstands anliegt. Ausgehend von dieser Situation kann ein Benutzer durch manuelle Betätigung des Betätigungselements gegebenenfalls eine zusätzliche Aufwickelbewegung der Wickelwelle durchführen, um die Zugkraft im Zugmittel so weit zu erhöhen, dass der plattenförmige Gegenstand sicher in der Halteeinrichtung aufgenommen ist, um in einem anschließenden Betätigungsschritt die Blockiereinrichtung zu aktivieren und damit die Einspannung des plattenförmigen Gegenstands dauerhaft bis zu einem Lösen der Blockiereinrichtung aufrechtzuerhalten.

Zweckmäßig ist es, wenn eine Koppelfeder zur kraftübertragenden Kopplung des Betätigungselements mit der Wickelwelle vorgesehen ist, wobei am Halter und am Betätigungselement zueinander korrespondierende Stützflächen für eine Drehmomentabstützung zwischen Betätigungselement und Halter ausgebildet sind. Die zueinander korrespondierenden Stützflächen können beispielsweise Seitenflächen von axial abragenden Vorsprüngen oder axial eingebrachten Vertiefungen am Halter und/oder am Betätigungselement sein. Diese Seitenflächen ermöglichen aufgrund ihrer Ausrichtung eine Kraftübertragung von Kräften, die aus Drehmomenten resultieren, die zwischen dem Halter und dem Betätigungselement wirken und insbesondere in einer Tangentialrichtung bezogen auf einen Kreis um die Wickelachse ausgerichtet sind. Das Drehmoment zwischen dem Halter und dem Betätigungselement geht insbesondere auf eine Zugkraft zurück, die vom zweiten Halter auf das Zugmittel und von dort über die Wickelwelle auf das Betätigungselement ausgeübt wird und dementsprechend am Halter abgestützt werden soll, um eine unerwünschte Rotation der Wickelwelle und eine Lockerung des Zugmittels zu verhindern. Ergänzend kann ein Anteil des Drehmoments auf einer elastischen Deformation einer Koppelfeder beruhen, die für eine kinematische Kopplung des Betätigungselements mit der Wickelwelle vorgesehen ist und die bei einer manuellen Betätigung des Betätigungselements zum Spannen des Zugmittels für eine ordnungsgemäße Festlegung des plattenförmigen Gegenstands deformiert wird. Die Aufgabe dieser Koppelfeder, die beispielsweise als kreiszylindrische Wendelfeder ausgebildet sein kann, besteht insbesondere darin, eine rotatorische Ausrichtung des Betätigungselements gegenüber dem Halter derart zu ermöglichen, dass die am Halter und am Betätigungselement vorgesehenen, zueinander korrespondierenden Stützflächen in Anlage zueinander gebracht werden können, um die gewünschte Drehmomentabstützung für das Betätigungselement bei Einhaltung einer Mindestzugkraft auf das Zugmittel zu gewährleisten, ohne dass hierbei eine übermäßige Zugkraft auf das Zugmittel eingeleitet wird.

Bei einer vorteilhaften Weiterbildung der Erfindung ist vorgesehen, dass das Betätigungselement zwischen einer Freigabestellung und einer Blockierstellung linearbeweglich an der Wickelwelle gelagert ist und dass zwischen der Wickelwelle und dem Betätigungselement eine Axialfeder angeordnet ist, um die Blockierstellung als Vorzugsstellung für das Betätigungselement zu bestimmen, wobei das Betätigungselement und die Wickelwelle zueinander korrespondierende Steuerflächen zur Vorgabe einer Winkelstellung zwischen Betätigungselement und Wickelwelle zur Einnahme der Blockierstellung aufweisen. Durch die linearbewegliche Lagerung des Betätigungselements gegenüber der Wickelwelle kann eine Blockierstellung eingenommen oder aufgehoben werden. Hierzu ist vorgesehen, dass die zueinander korrespondierenden Stützflächen am Halter und am Betätigungselement eine axiale Erstreckung aufweisen, die derart gewählt ist, dass bei einer linearen Bewegung des Betätigungselements aus der Blockierstellung, in der ein Eingriff zwischen den Stützflächen vorliegt, in die Freigabestellung bewirkt werden kann, dass der Eingriff zwischen den Stützflächen aufgehoben wird. Um einem Benutzer der Halteeinrichtung die Bedienung, insbesondere für eine Festlegung eines plattenförmigen Gegenstands an der Halteeinrichtung, zu erleichtern, ist zwischen der Wickelwelle und dem Betätigungselement eine Axialfeder angeordnet, die derart vorgespannt ist, dass sie in der Blockierstellung eine minimale innere Spannung aufweist und in der Freigabestellung eine demgegenüber größere innere Spannung aufweist, so dass die Blockierstellung als Vorzugsstellung für das Betätigungselement bestimmt ist. Um eine zusätzliche, zur sicheren Festlegung des plattenförmigen Gegenstands in der Halteeinrichtung wünschenswerte Krafteinleitung auf das Zugmittel zu erzielen, die über die von der Federanordnung auf das Zugmittel eingeleiteten Zugkraft hinausgeht, sind am Betätigungselement und an der Wickelwelle zueinander korrespondierende Steuerflächen ausgebildet, die ein Einnehmen der Blockierstellung durch das Betätigungselement erst dann zulassen, wenn das Betätigungselement um einen von den Steuerflächen vorgegebenen Winkelbetrag relativ zur Wickelwelle verdreht wurde, wobei im Zuge dieser Drehbewegung eine elastische Deformation der Koppelfeder stattfindet, die zwischen dem Betätigungselement und der Wickelwelle vorgesehen ist. Beispielhaft kann durch die konstruktive Gestaltung der insbesondere in axialer Richtung ausgerichteten, bereichsweise einander gegenüberliegenden Steuerflächen am Betätigungselement und an der Wickelwelle erreicht werden, dass das Betätigungselement zunächst um einen Winkelbetrag von 120 Grad gegenüber der Wickelwelle verdreht werden muss, bis die Steuerflächen die lineare Bewegung des Betätigungselements aus der Freigabestellung in die Blockierstellung zulassen.

In weiterer Ausgestaltung der Erfindung ist vorgesehen, dass das Betätigungselement ein Betätigungsteil und ein Koppelteil umfasst, wobei das Koppelteil für eine Kraftübertragung vom Betätigungsteil auf die Koppelfeder ausgebildet ist und wobei das Betätigungsteil unidirektional drehbeweglich am Koppelteil gelagert ist. Hierdurch wird eine Bedienung der Halteeinrichtung, insbesondere während des Festlegungsvorgangs für den plattenförmigen Gegenstand, erleichtert, da das Betätigungsteil des Betätigungselements gegenüber dem Koppelteil aufgrund der unidirektionalen drehbeweglichen Lagerung, die in der Art eines Freilaufs ausgebildet sein kann, wie dies aus dem Bereich der Fahrräder bekannt ist, nach dem Einhängen des zweiten Halters am plattenförmigen Gegenstand zunächst in eine günstige Stellung gedreht werden kann, um anschließend das zusätzliche Drehmoment zur endgültigen Festlegung des plattenförmigen Gegenstands an der Halteeinrichtung vom Betätigungsteil über das Koppelteil und die Koppelfeder auf die Wickelwelle einzuleiten. Vorzugsweise ist vorgesehen, dass die Steuerfläche des Betätigungselements am Koppelteil ausgebildet ist, so dass eine relative Verdrehung des Betätigungsteils gegenüber dem Koppelteil keinen Einfluss auf eine rotatorische Stellung der zueinander korrespondierenden Steuerflächen und des dadurch definierten Winkelbereichs hat, den das Betätigungselement gegenüber der Wickelwelle überstreichen soll, bevor es aus der Freigabestellung in die Blockierstellung überführt werden kann.

Bevorzugt sind der erste Halter und/oder der zweite Halter als Aluminium-Strangpressteil ausgebildet. Dies ermöglicht eine kostengünstige Herstellung der Halter als hochwertige Aluminiumteilen, wobei vorgesehen sein kann, dass der erste Halter und/oder der zweite Halter vor einer Verwendung in der Halteeinrichtung noch nachbearbeitet werden, insbesondere durch spanendes Nachbearbeiten wie Drehen oder Fräsen oder durch eine Oberflächenbeschichtung. Alternativ können der erste Halter und/oder der zweite Halter als Kunststoffspritzgussteile oder als Kunststoff-Extrusionsteile ausgebildet sein.

Eine vorteilhafte Ausführungsform der Erfindung ist in der Zeichnung dargestellt. Hierbei zeigt:
- Figur 1: eine perspektivische Darstellung einer Halteeinrichtung mit einem ersten Halter und einem beabstandet davon angeordneten zweiten Halter, der mit dem ersten Halter über ein als Gurtband ausgebildetes Zugmittel verbunden ist,
- Figur 2: eine Schnittdarstellung der Halteeinrichtung gemäß der Figur 1,
- Figur 3: eine Darstellung wesentlicher Einzelkomponenten der Halteeinrichtung gemäß den Figuren 1 und 2 in unterschiedlichen Perspektiven, und
- Figur 4: eine perspektivische Detaildarstellung einer Blockiereinrichtung, wie sie bei der Halteeinrichtung gemäß den Figuren 1 bis 3 verwirklicht ist.

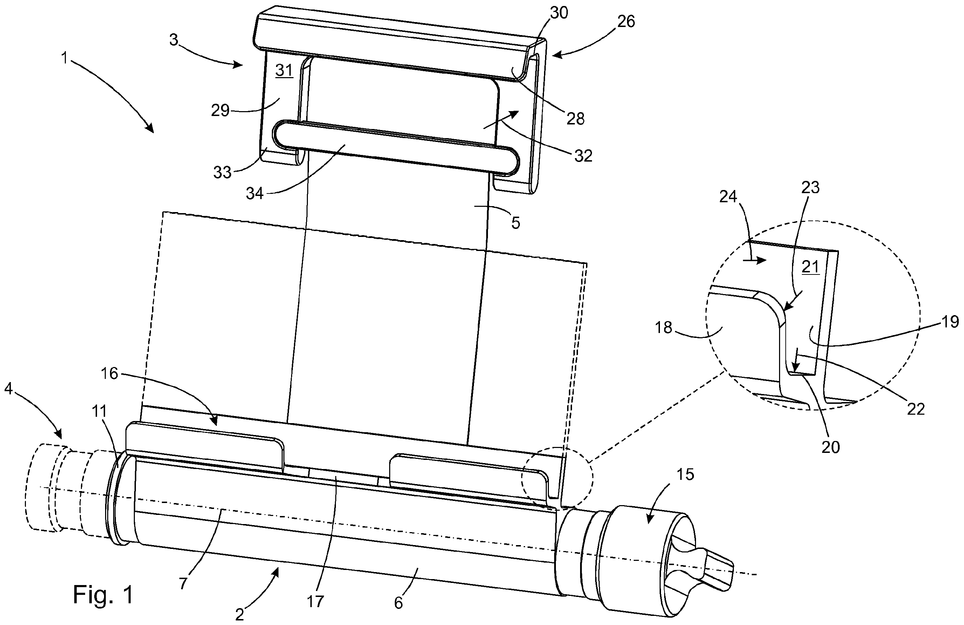

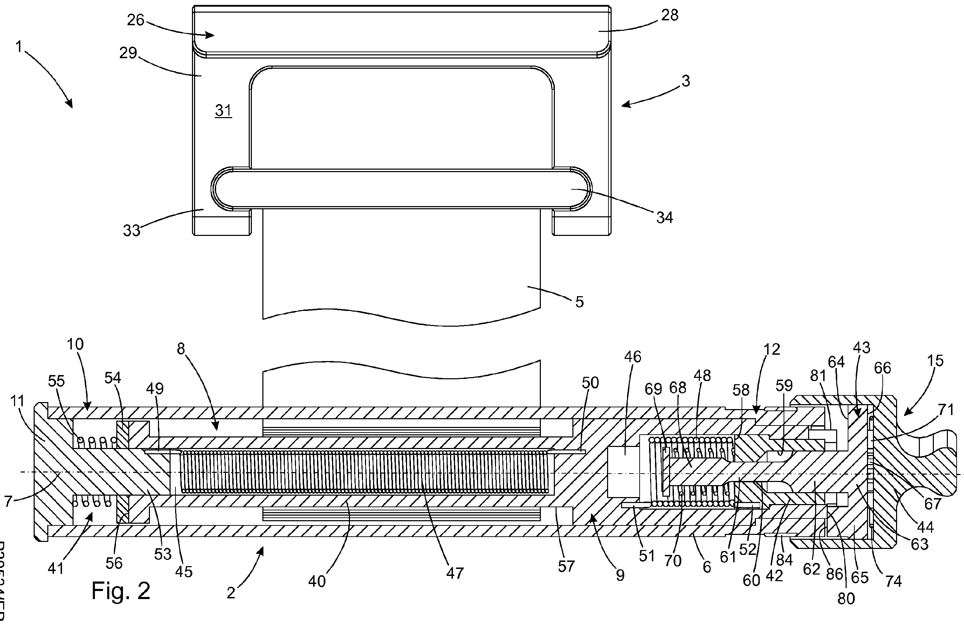

Eine in den Figuren 1 und 2 gezeigte Halteeinrichtung 1 ist zur Festlegung eines nicht näher dargestellten, insbesondere plattenförmig ausgebildeten, Gegenstands, beispielsweise eines Tabletcomputers, vorgesehen und umfasst eine nur schematisch und nur in der Figur 1 gezeigte, rein exemplarisch an einem ersten Halter 2 seitlich angeordnete, auch als Kupplungsanordnung bezeichnete Schnittstelle 4, die für eine Kopplung der Halteeinrichtung 1 mit einer nicht näher dargestellten Trageinrichtung, beispielsweise einem Schwenkarm, ausgebildet ist. Der nicht dargestellte Schwenkarm kann seinerseits an einem Verkleidungsteil oder einem Rumpfteil eines ebenfalls nicht dargestellten Luftfahrzeugs, beispielsweise eines Helikopters oder eines Verkehrsflugzeugs, festgelegt sein. Die nur rein schematisch dargestellte Schnittstelle 4 ist dabei zur Aufnahme in einem nicht dargestellten, korrespondierend ausgebildeten Aufnahmeabschnitt der ebenfalls nicht dargestellten Trageinrichtung vorgesehen, ohne dass hierauf näher eingegangen werden soll.

Die Halteeinrichtung 1 umfasst neben dem ersten Halter 2 einen zweiten Halter 3, der mit dem ersten Halter 2 über ein rein exemplarisch als biegeschlaffes textiles Gurtband 5 ausgebildetes Zugmittel verbunden ist, das in nachstehend näher beschriebener Weise am ersten Halter 2 aufgenommen ist und eine Abstandsveränderung zwischen dem ersten Halter 2 und dem zweiten Halter 3 sowie hiermit eine Festlegung eines nicht näher dargestellten plattenförmigen Gegenstands zwischen dem ersten Halter 2 und dem zweiten Halter 3 ermöglicht.

Der erste Halter 2 umfasst ein Gehäuseteil 6, das sich entlang einer zumindest im Wesentlichen konstanten Profilierung längs einer Erstreckungsachse 7 erstreckt und das eine in der Figur 2 näher dargestellte Ausnehmung 8 aufweist, in der eine nachstehend näher beschriebene Wickelanordnung 9 aufgenommen ist. An einem ersten Endbereich 10 des Gehäuseteils 6 ist die bereits erwähnte Schnittstelle 4 ausgebildet, die sich rein exemplarisch von einem bereichsweise in der Ausnehmung 8 drehfest aufgenommenen Abschlussdeckel 11 längs der Erstreckungsachse 7 erstreckt. An einem zweiten Endbereich 12 des Gehäuseteils 6 ist ein als Drehknopf ausgebildetes Betätigungselement 15 angeordnet, wobei das Betätigungselement 15 in ebenfalls nachstehend näher beschriebener Weise kinematisch mit der Wickelanordnung 9 gekoppelt ist.

An einer Außenoberfläche des Gehäuseteils 6 ist ein erster Aufnahmeabschnitt 16 ausgebildet, der sich rein exemplarisch abgesehen von einer Unterbrechung 17 im mittleren Bereich über die gesamte Länge des Gehäuseteils 6 erstreckt und beispielhaft U-förmig profiliert ist. Gemäß der Ausführungsform der Figuren 1 und 2 ist ein in der Figur 1 vorderer U-Schenkel 18 kürzer als ein hinterer U-Schenkel 19 ausgebildet, wobei der hintere U-Schenkel 19 auch erheblich länger als der vordere U-Schenkel 18 ausgebildet sein kann, wie dies durch die gestrichelte Darstellung gemäß der Figur 1 symbolisiert ist.

Ferner ist vorgesehen, dass die beiden U-Schenkel 18, 19 des Aufnahmeabschnitts 16 durch einen Verbindungsabschnitt 20 miteinander verbunden sind und dass rein exemplarisch der vordere U-Schenkel 18 einen Winkel von ca. 110 Grad gegenüber dem Verbindungsabschnitt 20 einnimmt, während der hintere U-Schenkel 19 einen Winkel von ca. 90 Grad gegenüber dem Verbindungsabschnitt 20 einnimmt. Eine Erstreckung des Verbindungsabschnitts 20 (quer zur Erstreckungsachse 7) ist derart gewählt, dass ein nicht näher dargestellter Tabletcomputer mit üblicher Dicke derart in dem Aufnahmeabschnitt 16 aufgenommen werden kann, das eine nicht dargestellte Schmalseite des Tabletcomputers in flächige Anlage zum Verbindungsabschnitt 20 kommt, während eine Rückseite des Tabletcomputers in flächige Anlage an einer Vorderseite 21 des hinteren U-Schenkels 19 gelangt und eine Vorderseite des Tabletcomputers eine Linienberührung gegenüber dem schräg gestellten vorderen U-Schenkel 18 aufweist.

Sofern eine Dicke des Tabletcomputers größer als die Erstreckung des Verbindungsabschnitts 20 sein sollte, liegt der Tabletcomputer flächig an der Vorderseite 21 des hinteren U-Schenkels 19 an und weist eine Linienberührung gegenüber dem schräg gestellten vorderen U-Schenkel 18 auf. Durch die Wechselwirkung des nicht näher dargestellten Tabletcomputers mit den beiden U-Schenkeln 18, 19 und gegebenenfalls dem Verbindungsabschnitt 20 wird eine formschlüssige Festlegung des Tabletcomputers in einer Normalenrichtung 22 zum Verbindungsabschnitt 20 sowie in die Normalenrichtungen 23 bzw. 24 gegenüber den U-Schenkeln 18, 19 gewährleistet.

Der zweite Halter 3 ist rein exemplarisch mit einer U-förmigen Profilierung längs der Erstreckungsachse 7 ausgebildet und weist gemäß der Darstellung der Figur 1 einen Aufnahmeabschnitt 26 mit einem vorderen U-Schenkel 28 sowie einem hinteren U-Schenkel 29 auf, wobei ein Verbindungsabschnitt 30 zwischen dem vorderen U-Schenkel 28 und dem hinteren U-Schenkel 29 vorgesehen ist, der rein exemplarisch in einem Winkel von 90 Grad gegenüber dem hinteren U-Schenkel 29 und in einem Winkel von ca. 110 Grad gegenüber dem vorderen U-Schenkel 28 ausgerichtet ist. Wie der Darstellung der Figuren 1 und 2 entnommen werden kann, ist der hintere U-Schenkel 29 erheblich länger als der vordere U-Schenkel 28 und ist seinerseits bezogen auf eine Flächennormale 32 einer Vorderseite 31 U-förmig profiliert. Somit ist der zweite Halter 3 in der Art eines Koffergriffs ausgebildet und kann in einfacher Weise von einem nicht dargestellten Bediener gegriffen werden. An einem Endbereich 33 des hinteren U-Schenkels 29 ist ein Verbindungssteg 34 angebracht, der in nicht näher dargestellter Weise mit dem Gurtband 5 verbunden ist und hiermit die kraftübertragende Kopplung zwischen dem zweiten Halter 3 und den Gurtband 5 gewährleistet.

Wie aus der Darstellung der Figur 2 entnommen werden kann, ist in der Ausnehmung 8 des Gehäuseteils 6 die Wickelanordnung 9 aufgenommen. Die Wickelanordnung 9 umfasst rein exemplarisch eine nahezu über die gesamte Länge des Gehäuseteils 6 erstreckte Wickelwelle 40, die rotationssymmetrisch zu der als Rotationsachse eingezeichneten Erstreckungsachse 7 ausgebildet ist. Ferner umfasst die Wickelanordnung 9 eine dem Abschlussdeckel 11 zugeordnete und nachstehend näher beschriebene Bremseinrichtung 41, einen Mitnehmer 42 sowie das Betätigungselement 15, das seinerseits ein Koppelteil 43 und ein Betätigungsteil 44 umfasst. Zudem sind in einer ersten Ausnehmung 45 der Wickelwelle 40 eine als kreiszylindrische Wendelfeder 47 ausgebildete Federeinrichtung sowie in einer zweiten Ausnehmung 46 eine als kreiszylindrische Wendelfeder 48 ausgebildete Koppelfeder aufgenommen, deren Funktion nachstehend näher beschrieben wird. Beispielhaft ist vorgesehen, dass die Wendelfeder 47 mit einem längs der Erstreckungsachse 7 ausgerichteten ersten Endabschnitt 49 in einer nicht näher bezeichneten Bohrung des Abschlussdeckels 11 festgelegt ist und mit einem längs der Erstreckungsachse 7 ausgerichteten zweiten Endabschnitt 50 in einer nicht näher bezeichneten Bohrung der Wickelwelle 40 festgelegt ist. Ferner ist vorgesehen, dass die Wendelfeder 48 mit einem ersten Endabschnitt 51 in einer nicht näher bezeichneten Bohrung der Wickelwelle 40 festgelegt ist und mit einem zweiten Endabschnitt 52 in einer nicht näher bezeichneten Bohrung des Mitnehmers 42 festgelegt ist.

Exemplarisch ist vorgesehen, dass die erste Ausnehmung 45 in der Wickelwelle 40 und ein zapfenförmiger, insbesondere kreiszylindrisch ausgebildeter, Vorsprung 53 des Abschlussdeckels 11 derart aufeinander angepasst sind, dass eine nicht näher bezeichnete kreiszylindrische Außenoberfläche des Vorsprungs 53 als Gleitlager für die Wickelwelle 40 dient. Ferner ist vorgesehen, dass der Vorsprung 53 für eine Lagerung einer Bremsscheibe 54 ausgebildet ist, die kreisringförmig ausgeführt ist und die von einer kreiszylindrischen Wendelfeder 55 gegen eine axiale Stirnfläche 56 der Wickelwelle 40 gepresst wird. Vorzugsweise ist vorgesehen, dass die Bremsscheibe 54 und ggf. die Wendelfeder 55 in nicht näher dargestellter Weise drehfest am Abschlussdeckel 11 aufgenommen sind, so dass eine Rotationsbewegung der Wickelwelle 40 um die Erstreckungsachse 7 zu einem Reibmoment gegenüber der Bremsscheibe 54 führt, wodurch die Rotationsbewegung der Wickelwelle 40 gebremst wird.

An einem zentralen, mit verringertem Durchmesser ausgeführten Mittelabschnitt 57 der Wickelwelle 40 ist das Gurtband 5 aufgewickelt, so dass eine Rotationsbewegung der Wickelwelle 40 um die Erstreckungsachse 7 in Abhängigkeit von der jeweiligen Drehrichtung zu einem Aufwickeln oder Abwickeln des Gurtbands 5 auf die Wickelwelle 40 bzw. von der Wickelwelle 40 führt. Ferner führt eine Rotationsbewegung der Wickelwelle 40 zu einer Rotation des Endabschnitts 50 der Wendelfeder 47 gegenüber dem Endabschnitt 49 der Wendelfeder 47, wodurch in Abhängigkeit von der jeweiligen Drehrichtung eine Energiespeicherung oder eine Energiefreigabe durch die Wendelfeder 47 erfolgen kann. Vorzugsweise ist vorgesehen, dass die Wendelfeder 47 und eine Wickelrichtung für das auf die Wickelwelle 40 aufgewickelte Gurtband 5 derart aufeinander abgestimmt sind, dass für ein Abwickeln des Gurtbands 5 von der Wickelwelle 40 eine Einleitung einer Zugkraft auf das Gurtband 5 erforderlich ist und zu einer Energiespeicherung in der Wendelfeder 47 führt, während eine Reduzierung der Zugkraft auf das Gurtband 5 ein Aufwickeln des Gurtbands auf die Wickelwelle 40 aufgrund der Energie, die in der Wendelfeder 47 gespeichert ist, bewirkt.

Ferner ist vorgesehen, dass der Mitnehmer 42 drehbeweglich in der zweiten Ausnehmung 46 der Wickelwelle 40 aufgenommen ist und zum einen über die Wendelfeder 48, die auch als Koppelfeder bezeichnet wird, in kinematischer Kopplung mit der Wickelwelle 40 steht und zum anderen drehfest und linearbeweglich mit dem Koppelteil 43 des Betätigungselements 15 in Wirkverbindung steht. Hierzu ist rein exemplarisch vorgesehen, dass der an sich rotationssymmetrisch ausgebildete Mitnehmer 42 eine als Langloch zwischen einer axialen Stirnfläche 58 und einer Axialbohrung 59 erstreckte Ausnehmung 60 aufweist, die von einem identisch profilierten Führungsabschnitt 61 des Koppelteils 43 durchsetzt ist, womit eine linearbewegliche und drehfeste Kopplung zwischen Mitnehmer 42 und Koppelteil 43 verwirklicht wird.

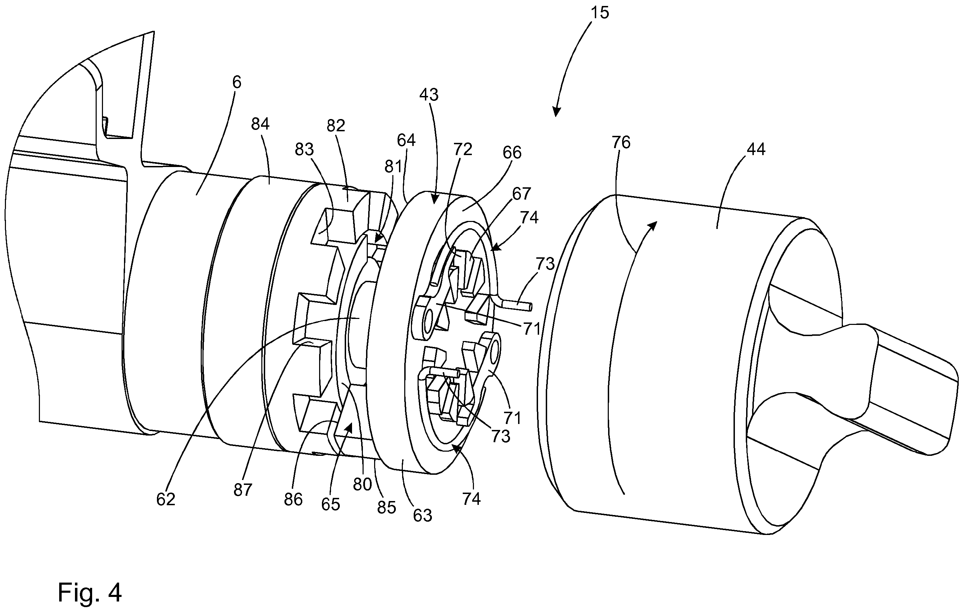

Das vorzugsweise mehrteilig ausgebildete Koppelteil 43 weist ferner einen in der Axialbohrung 59 des Mitnehmers 42 aufgenommenen Zylinderabschnitt 62 sowie eine daran axial anschließende Steuerscheibe 63 auf, wobei an einer ersten axialen Stirnfläche 64 der Steuerscheibe 63 ein kreisringabschnittsförmiger Steuervorsprung 65 ausgebildet ist, während an einer zweiten axialen Stirnfläche 66 der Steuerscheibe 63 mehrere, insbesondere in der Figur 4 näher dargestellte und in einheitlicher Winkelteilung zur Erstreckungsachse 7 ausgerichtete, insbesondere kreisringabschnittsförmige, Rastnocken 67 angeordnet sind. Ferner umfasst das Koppelteil 43 einen an den Führungsabschnitt 61 angrenzenden, rein exemplarisch kreiszylindrisch ausgebildeten Federträger 68, der endseitig mit einer Stützscheibe 69 versehen ist, die einen größeren Durchmesser als der Federträger 68 aufweist. Zwischen der Stützscheibe 69 und der Stirnfläche 58 des Mitnehmers 42 ist eine als kreiszylindrische Wendelfeder 70 ausgebildete Axialfeder angeordnet, die zur Ausübung einer gemäß der Darstellung der Figur 2 nach links gerichteten Federkraft auf das Koppelteil 43 ausgebildet ist und hierzu in entsprechender Weise vorgespannt ist.

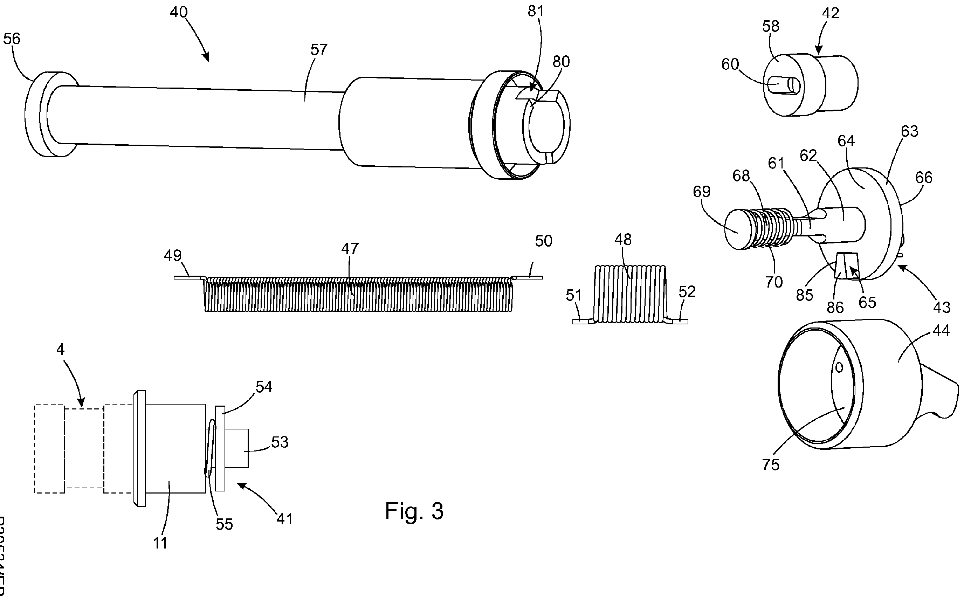

An der zweiten Stirnfläche 66 der Steuerscheibe 63 sind kinematisch dem Betätigungsteil 44 zugehörige, schwenkbeweglich an einer in der Figur 3 sichtbaren Axialfläche 75 des Betätigungsteils 44 gelagerte Sperrklinken 71 angeordnet, die gemäß der Darstellung der Figur 4 für eine formschlüssige Anlage an Seitenflächen 72 der Rastnocken 67 vorgesehen sind und jeweils durch bogenförmig ausgebildete, mit einem axial abgewinkelten Endbereich 73 an einer Axialfläche 75 im Betätigungsteil 44 festgelegte Sperrfedern 74 in radialer Richtung nach innen gegen die Rastnocken 67 angepresst werden. Hierdurch bilden das Koppelteil 43 und das Betätigungsteil 44 einen unidirektional wirkenden Freilauf. Somit kann das Betätigungsteil 44 in einer nicht eingezeichneten, ersten Rotationsrichtung frei drehbar gegenüber dem Koppelteil 43 verdreht werden, ohne dass hierbei eine für die Funktion der Halteeinrichtung 1 erhebliche Drehmomentübertragung stattfindet. Hingegen findet bei einer Rotation des Betätigungsteils 44 in einer zweiten Rotationsrichtung 76 eine Drehmomentübertragung vom Betätigungsteils 44 auf das Koppelteil 43 statt, da in diesem Fall eine Krafteinleitung vom Betätigungsteil 44 über die Sperrklinken 71 auf die Seitenflächen 72 der Rastnocken 67 stattfinden kann.

Bei einer Nutzung der Halteeinrichtung 1, die insbesondere an einer nicht näher dargestellten Trageinrichtung in einem Luftfahrzeug festgelegt sein kann, kann die folgende Abfolge vorgesehen sein: zunächst befindet sich der zweite Halter 3 in einem minimalen Abstand gegenüber dem ersten Halter 2. Dabei ist die Wendelfeder 47, die in der Wickelwelle 40 aufgenommen ist, derart vorgespannt, dass das Gurtband 5 unabhängig von einer Aufwicklung bzw. Abwicklung von der Wickelwelle 40 stets mit einer Zugkraft beaufschlagt ist. Ferner ist vorgesehen, dass das Betätigungselement 15 eine Freigabestellung einnimmt, bei der ein größerer axialer Abstand zwischen dem Betätigungselement 15 und dem Gehäuseteil 6 vorliegt als in einer nachstehend näher beschriebenen Blockierstellung.

Sofern ein Benutzer nunmehr einen nicht näher dargestellten plattenförmigen Gegenstand, insbesondere einen Tabletcomputer, mit Hilfe der Halteeinrichtung 1 festlegen möchte, ist zunächst vorgesehen, dass der Benutzer manuell durch Ergreifen des zweiten Halters 3 und durch eine Einleitung einer Zugkraft auf den zweiten Halter 3 einen Abstand zwischen dem ersten Halter 2 und dem zweiten Halter 3 vergrößert. Im Zuge dieser Abstandsvergrößerung wird das Gurtband 5 entgegen der Rückstellkraft der Wendelfeder 47 von der Wickelwelle 40 abgewickelt. Aufgrund der Rotation der Wickelwelle 40 um die Erstreckungsachse 7 findet eine Torsion der Wendelfeder 47 um die Erstreckungsachse 7 statt, so dass ein Anteil der vom Benutzer eingeleiteten Zugkraft als Deformationsenergie in der elastisch deformierten Wendelfeder 47 gespeichert werden kann. Sobald ein Abstand zwischen dem zweiten Halter 3 und dem ersten Halter 2 ausreichend ist, kann der nicht näher dargestellte plattenförmige Gegenstand zwischen den beiden Aufnahmeabschnitten 16 und 26 des ersten Halters 2 und des zweiten Halters 3 eingelegt werden. Zu diesem Zeitpunkt ist vorgesehen, dass der Benutzer die Bedienkraft auf den zweiten Halter 3 reduziert, bis sich zunächst ein Kräftegleichgewicht zwischen der vom Benutzer eingeleiteten Bedienkraft und der von der Wickelwelle 40 ausgeübten Zugkraft, die durch die Wendelfeder 47 hervorgerufen wird, einstellt.

Bei weiterer Reduzierung der Bedienkraft durch den Benutzer findet aufgrund des Drehmoments von der Wendelfeder 47 auf die Wickelwelle 40 eine Aufwickelbewegung für das Gurtband 5 auf die Wickelwelle 40 statt, so dass ein Abstand zwischen dem zweiten Halter 3 und dem ersten Halter 2 solange reduziert wird, bis der plattenförmige Gegenstand zwischen den beiden Aufnahmeabschnitten 16 und 26 gehalten ist. Um eine vorteilhafte Bedienbarkeit der Halteeinrichtung 1 zu gewährleisten, ist die Rückstellkraft / das Drehmoment der Wendelfeder 47 und die daraus resultierende Zugkraft der Wickelwelle 40 auf das Gurtband 5 auf einem eher niedrigen Niveau angesiedelt, so dass insbesondere ein zuverlässiges Aufwickeln des Gurtband 5 auf die Wickelwelle 40 gewährleistet ist, jedoch keine erheblich darüber hinausgehende Zugkrafteinleitung auf das Gurtband 5 erfolgt.

In Abhängigkeit von einem Einsatzfall für die Halteeinrichtung 1 und einem Gewicht des plattenförmigen Gegenstands kann die Situation auftreten, dass der plattenförmige Gegenstand allein durch die von der Wendelfeder 47 hervorgerufene Zugkraft nicht in einer Weise festgelegt ist, die alle Einsatzbedingungen im Rahmen eines bestimmungsgemäßen Gebrauchs für die Halteeinrichtung 1 erfüllen würde.

Um eine Festlegung des plattenförmigen Gegenstands in der Halteeinrichtung 1 zu erzielen, die beispielsweise alle Einsatzbedingungen für den bestimmungsgemäßen Gebrauch der Halteeinrichtung 1, insbesondere in einem Luftfahrzeug, erfüllt, bietet die Halteeinrichtung 1 dem Benutzer die Möglichkeit, eine zusätzliche Zugkraft auf das Gurtband 5 einzuleiten. Hierzu ist vorgesehen, dass der Benutzer eine Drehbewegung in der zweiten Rotationsrichtung 76 auf das Betätigungselement 15 einleitet, bei der ein vom Benutzer auf die Betätigungseinrichtung 40 eingeleitetes Drehmoment aufgrund der Sperrwirkung der Sperrklinken 71 über die Sperrklinken 71 auf die Rastnocken 67 übertragen wird. Da das mit den Rastnocken 67 versehene Koppelteil 43 mit seinem Führungsabschnitt 61 drehfest und linearbeweglich mit dem Mitnehmer 42 gekoppelt ist, findet eine Drehmomentübertragung vom Koppelteil 43 auf den Mitnehmer 42 statt.

Der Mitnehmer 42 ist seinerseits über die Wendelfeder 48 kinematisch mit der Wickelwelle 40 gekoppelt, so dass das auf den Mitnehmer 42 eingeleitete Drehmoment zusätzlich zum Drehmoment der Wendelfeder 47 auf die Wickelwelle 40 einwirkt und hiermit zu einer Vergrößerung der von der Wendelfeder 47 bereitgestellten Zugkraft auf das Gurtband 5 führt. Bei einer Vergrößerung des vom Benutzer auf das Betätigungselement 15 eingeleiteten Drehmoments kommt es aufgrund der elastischen Deformation der Wendelfeder 48, welche durch die Reaktionskräfte des Gurtbands 5 hervorgerufen wird, zu einer rotatorischen Relativbewegung zwischen dem Betätigungselement 15 und der Wickelwelle 40. Hierbei überstreicht der Steuervorsprung 65 des Koppelteils 43 mit seiner Stirnfläche 86 eine rein exemplarisch als Kreisringabschnitt ausgebildete Steuerfläche 80 an der Stirnseite der Wickelwelle 40, wobei durch diese Steuerfläche 80 zunächst eine axiale Annäherungsbewegung des Betätigungselements 15 an das Gehäuseteil 6 in Richtung der Erstreckungsachse 7 verhindert wird. Erst wenn der Steuervorsprung 65 die Steuerfläche 80 vollständig überstrichen hat, kann er in eine Ausnehmung 81 der Wickelwelle 40 eintauchen. Dabei ist eine radiale Erstreckung des Steuervorsprungs 65 derart ausgebildet, dass dieser zusätzlich auch die ausschließlich in der Figur 4 näher dargestellten Vorsprünge 82 und Vertiefungen 83 an einer Stirnseite des Gehäuseteils 6 überstreicht und somit erst dann eine axiale Bewegung des Betätigungselements 15 längs der Erstreckungsachse 7 zur Annäherung an das Gehäuseteil 6 möglich ist, wenn der Steuervorsprung 65 sowohl in die Ausnehmung 81 als auch in eine Vertiefung 83 eintauchen kann. Sobald der Steuervorsprung 65 in die Ausnehmung 81 und in die Vertiefung 83 eintauchen kann, kommt eine Stützfläche 85 des Steuervorsprungs 65 in Anlage an eine Stützfläche 87 in der Vertiefung 83 des Gehäuseteils 6, wodurch eine gemeinsame Drehmomentabstützung zwischen Betätigungselement 15, Wickelwelle 40 und Gehäuseteil 6 und damit die gewünschte Blockierung des Betätigungselements 15 erzielt wird.

Durch diese konstruktiven Maßnahmen wird erreicht, dass der Benutzer einerseits ein Mindestdrehmoment auf das Betätigungselement 15 einleiten muss, bevor ein Eintauchen in die Ausnehmung 81 ermöglicht wird. Ferner wird hierdurch erreicht, dass mit einem zeitgleichen Eintauchen des Steuervorsprungs 65 in die Ausnehmung 81 sowie in eine der Vertiefungen 83 eine Abstützung des Betätigungselements 15 am Gehäuseteil 6 und damit die gewünschte Blockierwirkung für das Betätigungselement 15 erzielt werden kann.

Da das Betätigungselement 15 aufgrund der axialen Vorspannung der Wendelfeder 70 in der Blockierstellung gehalten wird, ist somit der Festlegungsvorgang für den plattenförmigen Gegenstand beendet. Exemplarisch kann vorgesehen sein, dass am Gehäuseteil 6 ein Markierungsring 84 ausgebildet ist, der in der Blockierstellung vom Betätigungselement 15 überdeckt wird und der in der Freigabestellung für einen Benutzer sichtbar ist. Beispielsweise ist der Markierungsring 84 farblich vom Gehäuseteil 6 abgesetzt, insbesondere durch eine rote Farbgebung, so dass dem Benutzer für den Fall, dass das Betätigungselement 15 noch nicht die Blockierstellung eingenommen hat, signalisiert wird, dass die Festlegung des plattenförmigen Gegenstands noch nicht abgeschlossen ist.

Für ein Entnehmen des plattenförmigen Gegenstands aus der Halteeinrichtung 1 ist vorgesehen, dass ein Benutzer zunächst eine axiale Kraft auf das Betätigungselement 15 ausübt, um dieses entgegen der Vorspannung der Wendelfeder 70 längs der Erstreckungsachse 7 zu verschieben und dabei den Steuervorsprung 65 zeitgleich aus der Ausnehmung 81 und der Vertiefung 83 herauszubewegen. Der Benutzer stützt dann zunächst das von der Wendelfeder 48 auf die Wickelwelle 40 aufgebrachte Drehmoment manuell ab und ermöglicht anschließend eine Rotation des Betätigungselements 15 entgegen der zweiten Rotationsrichtung 76, wodurch eine Entspannung der Wendelfeder 48 erfolgt.

Daran anschließend kann der Benutzer manuell den zweiten Halter 3 ergreifen und einen Abstand zwischen dem zweiten Halter 3 und dem ersten Halter 2 vergrößern, um den plattenförmigen Gegenstand aus der Halteeinrichtung 1 zu entnehmen, wobei hier eine Abwicklung des Gurtbands 5 von der Wickelwelle 40 stattfindet. Im Anschluss daran kann der Benutzer seine auf den zweiten Halter 3 eingeleitete Zugkraft reduzieren, so dass aufgrund der in der Wendelfeder 47 gespeicherten Energie ein Aufwicklung des Gurtbands 5 auf die Wickelwelle 40 erfolgt und ein Abstand zwischen dem zweiten Halter 3 und dem ersten Halter 2 reduziert wird, bis der zweite Halter 3 gegenüber dem ersten Halter 2 seine Ausgangsstellung einnimmt.

## Patentansprüche

1. Haltevorrichtung zur zeitweiligen Festlegung eines plattenförmigen Gegenstands, insbesondere eines Tabletcomputers, mit einem ersten Halter (2), der eine Kupplungsanordnung (4) zur Verbindung mit einer Trageinrichtung und einen ersten Aufnahmeabschnitt (16) für eine zumindest in zwei Raumrichtungen formschlüssige Aufnahme einer ersten Schmalseite eines plattenförmigen Gegenstands aufweist, mit einem zweiten Halter (3), der einen zweiten Aufnahmeabschnitt (26) für eine zumindest in zwei Raumrichtungen formschlüssige Aufnahme einer zweiten Schmalseite eines plattenförmigen Gegenstands aufweist, sowie mit einem flexibel ausgebildeten Zugmittel (5), das mit dem ersten Halter (2) und dem zweiten Halter (3) verbunden ist und das für eine Zugkraftübertragung zwischen dem ersten Halter (2) und dem zweiten Halter (3) zur Festlegung des plattenförmigen Gegenstands ausgebildet ist, wobei dem ersten Halter (2) eine Wickeleinrichtung (9) mit einer drehbar am ersten Halter (2) gelagerten und von einem Endbereich des Zugmittels (5) umschlungenen Wickelwelle (40) zugeordnet ist, die für ein Aufwickeln und ein Abwickeln des Zugmittels (5) ausgebildet ist, **dadurch gekennzeichnet, dass** der Wickelwelle (40) eine am ersten Halter (2) abgestützte, vorgespannte Federanordnung (47) für eine Bereitstellung einer Zugkraft auf das Zugmittel (5) zugeordnet ist.

2. Haltevorrichtung nach Anspruch 1, **dadurch gekennzeichnet, dass** der erste Aufnahmeabschnitt (16) rinnenförmig ausgebildet ist und/oder längs einer ersten Erstreckungsachse (7) eine erste U-förmige Profilierung aufweist und/oder dass der zweite Aufnahmeabschnitt (26) rinnenförmig ausgebildet ist und/oder längs einer zweiten Erstreckungsachse (7) eine zweite U-förmige Profilierung aufweist.

3. Haltevorrichtung nach Anspruch 2, **dadurch gekennzeichnet, dass** der erste Aufnahmeabschnitt (16) und/oder der zweite Aufnahmeabschnitt (26) eine U-förmige Profilierung mit einem kürzeren U-Schenkel (18, 28) und einem längeren U-Schenkel (19, 29) aufweist und dass das Zugmittel am längeren U-Schenkel (19, 29) verläuft, insbesondere am längeren U-Schenkel (19, 29) angebracht ist.

4. Haltevorrichtung nach Anspruch 1, 2 oder 3, **dadurch gekennzeichnet, dass** das Zugmittel als flexibles Gurtband ausgebildet ist.

5. Haltevorrichtung nach Anspruch 1, 2, 3 oder 4, **dadurch gekennzeichnet, dass** eine Wickelachse der Wickelwelle (40) parallel zur Erstreckungsachse (7) des ersten Aufnahmeabschnitts (16) ausgerichtet ist.

6. Haltevorrichtung nach Anspruch 1, **dadurch gekennzeichnet, dass** der Wickelwelle (40) eine Blockiereinrichtung für eine drehfeste Festlegung der Wickelwelle (40) am ersten Halter (2) zugeordnet ist, die ein Betätigungselement (15) umfasst, das für eine manuelle Drehmomenteinleitung auf die Wickelwelle (40) ausgebildet ist.

7. Haltevorrichtung nach Anspruch 6, **dadurch gekennzeichnet, dass** eine Koppelfeder (48) zur kraftübertragenden Kopplung des Betätigungselements (15) mit der Wickelwelle (40) vorgesehen ist, wobei am ersten Halter (2) und am Betätigungselement (15) zueinander korrespondierende Stützflächen (85, 87) für eine Drehmomentabstützung zwischen Betätigungselement (15) und erstem Halter (2) ausgebildet sind.

8. Haltevorrichtung nach Anspruch 6 oder 7, **dadurch gekennzeichnet, dass** das Betätigungselement (15) zwischen einer Freigabestellung und einer Blockierstellung linearbeweglich an der Wickelwelle (40) gelagert ist und dass zwischen der Wickelwelle (40) und dem Betätigungselement (15) eine Axialfeder (70) angeordnet ist, um die Blockierstellung als Vorzugsstellung für das Betätigungselement (15) zu bestimmen, wobei das Betätigungselement (15) und die Wickelwelle (40) zueinander korrespondierende Steuerflächen (65, 80) zur Vorgabe einer Winkelstellung zwischen Betätigungselement (15) und Wickelwelle (40) zur Einnahme der Blockierstellung aufweisen.

9. Haltevorrichtung nach Anspruch 6, 7 oder 8, **dadurch gekennzeichnet, dass** das Betätigungselement (15) ein Betätigungsteil (44) und ein Koppelteil (43) umfasst, wobei das Koppelteil (43) für eine Kraftübertragung vom Betätigungsteil (44) auf die Koppelfeder (48) ausgebildet ist und wobei das Betätigungsteil (44) unidirektional drehbeweglich am Koppelteil (43) gelagert ist.

10. Haltevorrichtung nach einem der vorhergehenden Ansprüche, **dadurch gekennzeichnet, dass** der erste Halter (2) und/oder der zweite Halter (3) als Aluminium-Strangpressteil ausgebildet sind.

## Claims

1. Holding device for temporarily fixing a plate-shaped object, in particular a tablet computer, having a first holder (2), which has a coupling arrangement (4) for connection to a carrying device and a first receiving section (16) for positive locking a first narrow side of a plate-shaped object in at least two spatial directions, having a second holder (3), which has a second receiving section (26) for positive locking a second narrow side of a plate-shaped object in at least in two spatial directions, and having a flexible traction means (5), which is connected to the first holder (2) and to the second holder (3), which is designed for a transmission of tensile forces between the first holder (2) and the second holder (3) for fixing the plate-shaped object, wherein the first holder (2) comprises a winding device (9) with a winding shaft (40) which is rotatably mounted on the first holder (2) and around which an end region of the flexible traction means (5) is looped, wherein the winding shaft (40) is designed for winding and unwinding the traction means (5), **characterized in that** the winding shaft (40) is assigned a pretensioned spring arrangement (47) supported on the first holder (2) for providing a tensile force on the traction means (5).

2. Holding device according to claim 1, **characterized in that** the first receiving section (16) is of channel-shaped design and/or has a first U-shaped profiling along a first extension axis (7) and/or **in that** the second receiving section (26) is of channel-shaped design and/or has a second U-shaped profiling along a second extension axis (7).

3. Holding device according to claim 2, **characterized in that** the first receiving section (16) and/or the second receiving section (26) has a U-shaped profiling with a shorter U-limb (18, 28) and a longer U-limb (19, 29) and that the traction means is assigned to the longer U-limb (19, 29), in particular is attached to the longer U-limb (19, 29).

4. Holding device according to claim 1, 2 or 3, **characterized in that** the traction means is a flexible belt.

5. Holding device according to claim 1, 2, 3 or 4, **characterized in that** a winding axis of the winding shaft (40) is aligned parallel to the extension axis (7) of the first receiving section (16).

6. Holding device according to claim 1, **characterized in that** the winding shaft (40) is assigned a blocking device for a rotational fixing of the winding shaft (40) to the first holder (2), which blocking device comprises an actuating element (15) which is designed for a manual torque introduction onto the winding shaft (40).

7. Holding device according to claim 6, **characterized in that** a coupling spring (48) is provided for the force-transmitting coupling of the actuating element (15) to the winding shaft (40), wherein corresponding support surfaces (85, 87) for a torque transmission between actuating element (15) and first holder (2) are formed on the first holder (2) and on the actuating element (15).

8. Holding device according to claim 6 or 7, **characterized in that** the actuating element (15) is mounted on the winding shaft (40) so as to be linearly movable between a release position and a blocking position, and **in that** an axial spring (70) is arranged between the winding shaft (40) and the actuating element (15), in order to determine the blocking position as a preferred position for the actuating element (15), wherein the actuating element (15) and the winding shaft (40) have control surfaces (65, 80) corresponding to one another for presetting an angular position between the actuating element (15) and the winding shaft (40) for defining the blocking position.

9. Holding device according to claim 6, 7 or 8, **characterized in that** the actuating element (15) comprises an actuating part (44) and a coupling part (43), wherein the coupling part (43) is designed for a force transmission from the actuating part (44) to the coupling spring (48) and wherein the actuating part (44) is mounted unidirectionally rotatably on the coupling part (43).

10. Holding device according to one of the preceding claims, **characterized in that** the first holder (2) and/or the second holder (3) are formed as an extruded aluminium part.

## Revendications

1. Dispositif de retenue pour la fixation temporaire d'un objet en forme de plaque, en particulier d'une tablette, avec un premier élément de retenue (2), qui présente un agencement d'accouplement (4) pour la liaison à un dispositif de support et une première section de logement (16) pour une réception par complémentarité de forme au moins dans deux directions spatiales d'un premier côté étroit d'un objet en forme de plaque, avec un deuxième élément de retenue (3), qui présente une deuxième section de logement (26) pour une réception par complémentarité de forme au moins dans deux directions spatiales d'un deuxième côté étroit d'un objet en forme de plaque, ainsi qu'avec un moyen de traction (5) réalisé de manière souple, qui est relié au premier élément de retenue (2) et au deuxième élément de retenue (3) et qui est réalisé pour une transmission de force de traction entre le premier élément de retenue (2) et le deuxième élément de retenue (3) pour la fixation de l'objet en forme de plaque, dans lequel un dispositif d'enroulement (9) avec un arbre d'enroulement (40) logé en rotation au niveau du premier élément de retenue (2) et entouré par une zone d'extrémité du moyen de traction (5), qui est réalisé pour un enroulement et un déroulement du moyen de traction (5), est associé au premier élément de retenue (2), **caractérisé en ce qu'**un agencement ressort (47) précontraint, supporté au niveau du premier élément de retenue (2) est associé à l'arbre d'enroulement (40) pour une mise à disposition d'une force de traction sur le moyen de traction (5).

2. Dispositif de retenue selon la revendication 1, **caractérisé en ce que** la première section de logement (16) est réalisée en forme de gouttière et/ou présente le long d'un premier axe d'extension (7) un premier profilage en forme de U et/ou que la deuxième section de logement (26) est réalisée en forme de gouttière et/ou présente le long d'un deuxième axe d'extension (7) un deuxième profilage en forme de U.

3. Dispositif de retenue selon la revendication 2, **caractérisé en ce que** la première section de logement (16) et/ou la deuxième section de logement (26) présente un profilage en forme de U avec une branche de U plus courte (18, 28) et une branche de U plus longue (19, 29) et que le moyen de traction s'étend au niveau de la branche de U plus longue (19, 29), en particulier est monté au niveau de la branche de U plus longue (19, 29).

4. Dispositif de retenue selon la revendication 1, 2 ou 3, **caractérisé en ce que** le moyen de traction est réalisé en tant que sangle souple.

5. Dispositif de retenue selon la revendication 1, 2, 3 ou 4, **caractérisé en ce qu'**un axe d'enroulement de l'arbre d'enroulement (40) est orienté parallèlement à l'axe d'extension (7) de la première section de logement (16).

6. Dispositif de retenue selon la revendication 1, **caractérisé en ce qu'**un dispositif de blocage pour une fixation solidaire en rotation de l'arbre d'enroulement (40) au niveau du premier élément de retenue (2) est associé à l'arbre d'enroulement (40), qui comprend un élément d'actionnement (15), qui est réalisé pour une introduction de couple manuelle sur l'arbre d'enroulement (40).

7. Dispositif de retenue selon la revendication 6, **caractérisé en ce qu'**un ressort de couplage (48) est prévu pour le couplage par transmission de force de l'élément d'actionnement (15) avec l'arbre d'enroulement (40), dans lequel des surfaces d'appui (85, 87) correspondant les unes aux autres au niveau du premier élément de retenue (2) et au niveau de l'élément d'actionnement (15) sont réalisées pour un appui de couple entre l'élément d'actionnement (15) et le premier élément de retenue (2).

8. Dispositif de retenue selon la revendication 6 ou 7, **caractérisé en ce que** l'élément d'actionnement (15) est logé entre une position de libération et une position de blocage linéairement mobile au niveau de l'arbre d'enroulement (40) et qu'un ressort axial (70) est agencé entre l'arbre d'enroulement (40) et l'élément d'actionnement (15) pour déterminer la position de blocage en tant que position préférée pour l'élément d'actionnement (15), dans lequel l'élément d'actionnement (15) et l'arbre d'enroulement (40) présentent des surfaces de commande (65, 80) correspondant les unes aux autres pour la prescription d'une position angulaire entre l'élément d'actionnement (15) et l'arbre d'enroulement (40) pour l'adoption de la position de blocage.

9. Dispositif de retenue selon la revendication 6, 7 ou 8, **caractérisé en ce que** l'élément d'actionnement (15) comprend une pièce d'actionnement (44) et une pièce de couplage (43), dans lequel la pièce de couplage (43) est réalisée pour une transmission de force de la pièce d'actionnement (44) au ressort de couplage (48) et dans lequel la pièce d'actionnement (44) est logée unidirectionnellement mobile en rotation au niveau de la pièce de couplage (43).

10. Dispositif de retenue selon l'une quelconque des revendications précédentes, **caractérisé en ce que** le premier élément de retenue (2) et/ou le deuxième élément de retenue (3) sont réalisés en tant que pièce extrudée en aluminium.
